# EUROPEAN PATENT SPECIFICATION

(11) **EP 3 603 457 B1**
(45) Date of publication and mention of the grant of the patent: **04.06.2025**
(21) Application number: 18771294.8
(22) Date of filing: 12.03.2018
(51) Int. Cl.: A47C 27/14, A47C 7/20, A47C 31/02, B60N 2/70

(54) **VEHICLE SEAT CORE MATERIAL**
FAHRZEUGSITZKERNMATERIAL
MATÉRIAU D'ÂME DE SIÈGE DE VÉHICULE

(30) Priority: 23.03.2017 JP 2017057891
(43) Date of publication of application: 05.02.2020
(73) Proprietor: Kaneka Corporation, Osaka-shi, Osaka 530-8288 (JP)
(72) Inventor: TOBIMATSU, Yuki, Settsu-shi, Osaka 566-0072 (JP); SAMESHIMA, Masahiko, Settsu-shi Osaka 566-0072 (JP)
(74) Representative: Vossius & Partner Patentanwälte Rechtsanwälte mbB
(86) International application number: PCT/JP2018/009516
(87) International publication number: WO 2018/173835

(56) References cited:
- JP-A- 2011 016 458
- JP-A- 2011 016 458
- JP-A- H09 277 283
- JP-A- H09 277 283
- JP-A- S5 340 360
- JP-A- S5 340 360

## Description

### Technical Field

The present invention relates to a vehicle seat core material.

### Background Art

Conventionally, it was common to produce a seat of a vehicle (e.g., an automobile) by a known technique of molding a seat main body made of thermosetting polyurethane foam integrally with an insert material, made of metal or the like, for stabilizing the shape of the seat in such a manner that the insert material is embedded in the seat main body (Utility Model Literature 1 and Patent Literature 1). However, in view of achieving vehicle weight reduction, cost reduction, and the like, there has recently been proposed a configuration in which the thermosetting polyurethane foam and a portion of the insert material are replaced by an in-mold foamed molded product made of thermoplastic resin expanded particles (Utility Model Literature 2 and Patent Literatures 2 to 4). This is because such an in-mold foamed molded product is lighter than the thermosetting polyurethane foam and metal and has appropriate rigidity. The vehicle seat configured as above includes: a core material including (i) an in-mold foamed molded product made of thermoplastic resin expanded particles and (ii) an insert material (e.g., a metal wire) which is embedded in the in-mold foamed molded product; a cushion material stacked on the core material on a seat surface side; and a surface cover which is formed such that the core material and the cushion material are covered with the surface cover on the seat surface side. Note that the seat surface side means a side on which a passenger sits.

Examples of a method of fixing a surface cover include the inventions disclosed in Patent Literatures 1 and 2.

In Patent Literature 1, a pad material integrally molded with a wire frame has a recessed part in which the wire frame is half exposed, and a coupling pad for coupling the wire frame in the recessed part and the pad material is pierced with a coupler (hook member) for a skin material so that the skin material is fixed to the wire frame. No mention of a material of the pad material is made in Patent Literature 1.

In Patent Literature 2, a vehicle seat includes a cushion material (thermosetting foamed molded product), a raising member (foamed molded product made of a plurality of expanded resin particles) in which a part of a frame member for reinforcing the cushion material is embedded, and a surface cover which is formed so as to cover at least the cushion material, and a coupler (coupling means) for the surface cover is coupled to a frame member exposed portion, which is a portion of the frame member exposed to outside of the raising member, so that the surface cover is fixed to the frame member.

Patent Literature 3 discloses a mold structure for forming, in an in-mold foamed molded product in which an insert material is embedded, a movement permission space (e.g., a through hole), in which the insert material is exposed, for reducing warpage of the in-mold foamed molded product.

Patent Literature 4 discloses a mold structure for preventing an in-mold foamed molded product (foamed molded product) in which an insert material is embedded from having a burr formed around a protrusion of the insert material which protrudes outside the foamed molded product. Citation List

### [Patent Literatures]

[Patent Literature 1]
   Japanese Patent Application Publication, *Tokukaihei,* No. 9-276090 (Publication Date: October 28, 1997)
[Patent Literature 2]
   Japanese Patent Application Publication Tokukai No. 2011-016458(Publication Date: January 27, 2011)
[Patent Literature 3]
   PCT International Publication No. WO2016/152530 (Publication Date: September 29, 2016)
[Patent Literature 4]
   PCT International Publication No. WO2015/159691 (Publication Date: October 22, 2015)

### [Non-patent Literatures]

[Non-patent Literature 1]
   Japanese Utility Model Application Publication No. 63-112846 (Publication Date: July 20, 1988)
[Non-patent Literature 2]
   Publication of Japanese Registered Utility Model No. 3124213 (Registration Date: July 19, 2006) The document JP S53 40360 A discloses a vehicle seat material according to the state of the art.

### Summary of Invention

### Technical Problem

Unfortunately, the conventional techniques as described above admit of further improvement since they are unsatisfactory from the viewpoint of easily and quickly coupling the surface cover of the vehicle seat to the vehicle seat core material constituted by an in-mold foamed molded product which is made of thermoplastic resin expanded particles and is embedded with an insert material.

The present invention has been attained in view of the above problem, and it is an object of the present invention to provide a vehicle seat core material that (i) is constituted by an in-mold foamed molded product which is made of thermoplastic resin expanded particles and is embedded with an insert material and (ii) allows for easy and quick coupling of a surface cover of a vehicle seat to the vehicle seat core material.

### Solution to Problem

In order to solve the above problem, a vehicle seat core material according to claim 1 is provided. Preferential embodiments are provided in the dependant claims.

### Brief Description of Drawings

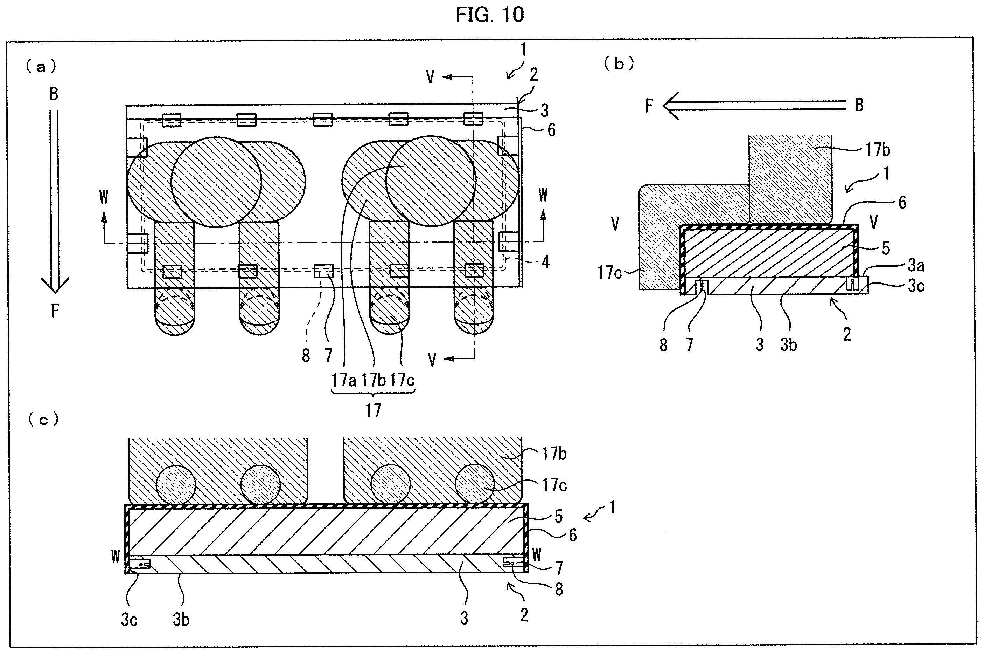

Fig. 1 is a perspective view illustrating a configuration of a vehicle seat in accordance with an embodiment of the present invention.
Fig. 2 is a plan view of a vehicle seat core material in accordance with Embodiment 1 of the present invention when viewed from a vehicle attachment surface side.
(a) of Fig. 3 is a cross-sectional view of the vehicle seat core material taken along line X-X in Fig. 2, and (b) of Fig. 3 is a cross-sectional view of the vehicle seat core material taken along line Y-Y in Fig. 2.
Fig. 4 is a view illustrating a state in which a coupler for a surface cover is fixed to an insert material exposed portion in the vehicle seat core material in accordance with Embodiment 1 of the present invention.
(a) to (c) of Fig. 5 are cross-sectional views each illustrating an example configuration of another hollow space and an example configuration of another protrusion, in accordance with Embodiment 1 of the present invention.
(a) to (c) of Fig. 6 are cross-sectional views each illustrating an example configuration of another insert material exposed portion in accordance with Embodiment 1 of the present invention.

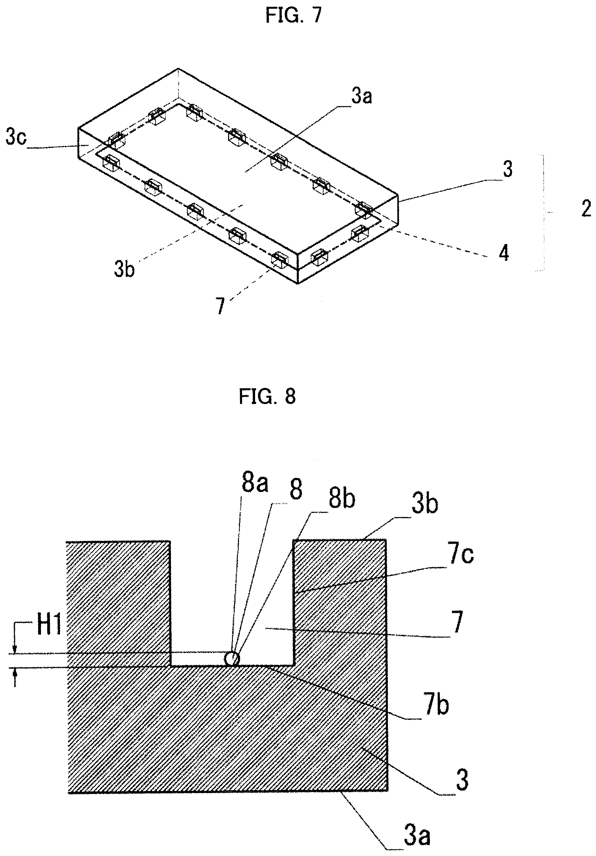

Fig. 7 is a perspective view illustrating a configuration of a vehicle seat core material in accordance with Embodiment 2 of the present invention.
Fig. 8 is a cross-sectional view illustrating a configuration of an insert material exposed portion in Comparative Example 1.

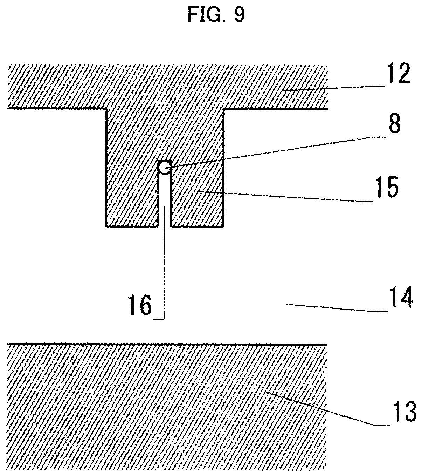

Fig. 9 is a cross-sectional view illustrating an example configuration of a mold for molding a vehicle seat core material in accordance with an embodiment of the present invention.
(a) of Fig. 10 is a view schematically illustrating a state in which passengers sit in a vehicle seat which includes a vehicle seat core material in accordance with Embodiment 3 of the present invention, (b) of Fig. 10 is a cross-sectional view taken along line V-V in (a) of Fig. 10, and (c) of Fig. 10 is a cross-sectional view taken along line W-W in (a) of Fig. 10.

### Description of Embodiments

### [Problems with the conventional techniques and advantages of an embodiment of the present invention]

The inventors of the present invention found that the conventional techniques described above have various problems. For example, the inventions disclosed in Patent Literatures 1 and 2, which describe a method of fixing a surface cover, can give rise to the problems below.

In Patent Literature 1, the hook-shaped coupler (hook member) is locked on the wire frame half-exposed portion in the recessed part of the pad material. The coupling pad material for coupling the wire frame and the pad material is cut and pierced with the hook member. In such a configuration, an operator may be injured by the hook member. Further, in a case where the hook member is coupled at a wrong position, the hook member need to be detached from the coupling pad material, so that the coupling pad material is cut and pierced with the hook member again. This means that the coupling pad material is further cut. In the worst case, cut pieces of the coupling pad material may adhere to a product. This may lead to a complaint with such a product.

In Patent Literature 2, the hook-shaped (hook-like) coupler (coupling means) is attached to the frame member exposed portion. As illustrated in the drawing of Patent Literature 2, the coupler is fixed to the exposed frame member only. This may cause the coupler to be easily detached from the frame member since the coupler is slightly hung on the frame member.

Patent Literature 3 discloses the in-mold foamed molded product embedded with the insert material. The in-mold foamed molded product disclosed in Patent Literature 3 has a through hole in which the insert material is exposed. Such a configuration is considered to allow a hook-shaped coupler to be fixed to the exposed insert material with reliability by hooking the coupler on the insert material. However, the hole can be located at such a position as to face parts of a passenger's body. Thus, there is room for improvement from the viewpoint of sitting comfort (cushioning property) of a vehicle seat.

Patent Literature 4 discloses the in-mold foamed molded product embedded with the insert material. The in-mold foamed molded product disclosed in Patent Literature 4 has a protrusion of the insert material protruding through the in-mold foamed molded product. Such a configuration is considered to allow a hook-shaped coupler to be fixed to the protruding insert material with reliability by hooking the coupler on the insert material. The configuration, however, requires a special mold structure for preventing a burr from being formed around the protrusion of the insert material. Thus, there is room for improvement from the viewpoint of ease of production and production cost.

As compared to the conventional techniques, an embodiment of the present invention has an advantage of providing a vehicle seat core material which (1) achieves easy production, (2) does not make a passenger uncomfortable, and (3) allows for coupling that makes a surface cover of a vehicle seat core material easily attached to the vehicle seat core material and less susceptible to detachment from the vehicle seat core material.
The following description will discuss embodiments of the present invention.

### [Configuration of vehicle seat]

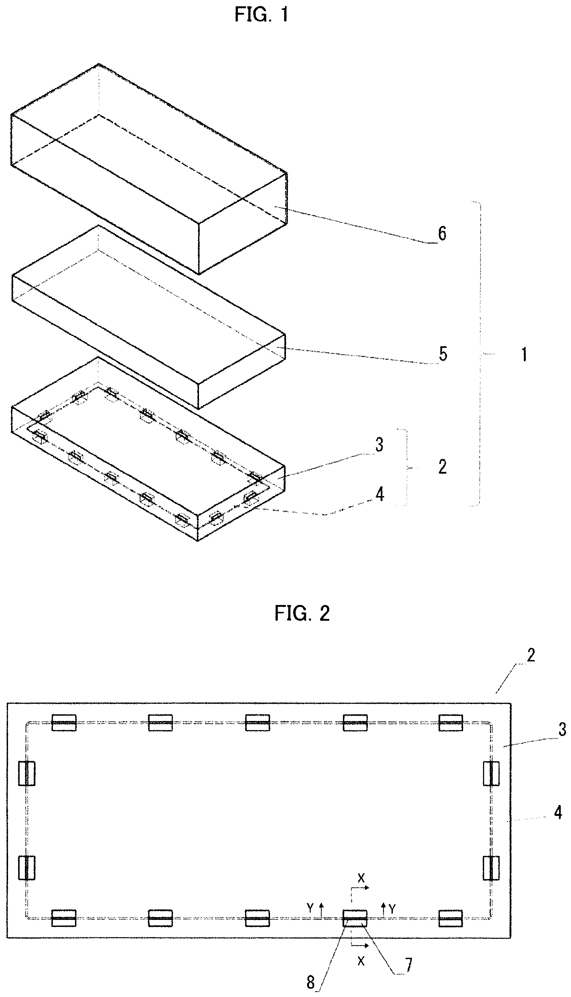

Fig. 1 is a perspective view illustrating a configuration of a vehicle seat in accordance with an embodiment of the present invention.

As illustrated in Fig. 1, a vehicle seat 1 includes a vehicle seat core material 2, a cushion material 5 (mainly polyurethane foam) which is stacked on the vehicle seat core material 2 on a seat surface side or is molded integrally with the vehicle seat core material 2 on the seat surface side, and a surface cover 6 which is provided such that the vehicle seat core material 2 and the cushion material 5 are covered with the surface cover 6 on the seat surface side. Here, the seat surface side means a side on which a passenger sits and refers to a side on which the surface cover 6 is provided in Fig. 1. A side opposite the seat surface side, i.e. a side on which the vehicle seat core material 2 is provided in Fig. 1, is a vehicle attachment surface side.

The vehicle seat core material 2 is constituted by an in-mold foamed molded product 3 which is made of thermoplastic resin expanded particles (expanded particles of a thermoplastic resin) and is integrally molded with an insert material 4 such that the insert material 4 is embedded in the in-mold foamed molded product 3.

The expanded particles of a thermoplastic resin are expanded particles of a polypropylene resin. particles".

Examples of the polypropylene resin include a propylene homopolymer, an ethylene/propylene copolymer, and an ethylene/propylene/1-butene copolymer. Examples of the polyethylene resin include an ethylene homopolymer, high density polyethylene resin, medium density polyethylene resin, low density polyethylene resin, and linear low-density polyethylene resin. More specific examples include ethylene/1-butene copolymer and ethylene/4-methyl-1-pentene copolymer. Note that the copolymers listed above for the polypropylene resin and the copolymers listed above for the polyethylene resin may be a random copolymer or may be a block copolymer.

A method of producing the thermoplastic resin expanded particles is not limited to any particular one, and can be a conventionally known production method. For example, in a case where the expanded particles to be produced are polyolefin-based resin expanded particles, examples of the production method include the methods disclosed in International Patent Application Publication No. WO 2009/075208, Japanese Patent Application Publication, Tokukai, No. 2006-117842, and the like. In a case where the expanded particles to be produced are polystyrene-based resin expanded particles, examples of the production method include the methods disclosed in Japanese Patent Application Publication, Tokukai, No. 2003-201360, Japanese Patent Application Publication, Tokukai, No. 2014-118474, International Patent Application Publication No. WO 2015/137363, and the like (in these patent literature, the expanded particles are disclosed as "pre-expanded particles"). In a case where the expanded particles to be produced are styrene-modified polyolefin-based resin expanded particles, examples of the production method include the methods disclosed in Japanese Patent Application Publication, Tokukai, No. 2008-239794, International Patent Application Publication No. WO 2016/152243, and the like. Note, however, that the method of producing the expanded particles is not limited to the above methods.

The expanded particles thus obtained can contain or be coated with an additive as needed by a conventionally known method, examples of which additive include a flame retarder, an antistatic agent, and a coloring agent. A particle size of the expanded particles is not limited to a particular particle size and can be, for example, 1 mm to 10 mm. From the viewpoint of the ease with which the expanded particles are filled into a molding space of a mold for molding an in-mold foamed molded product, the particle size of the expanded particles is preferably 1 mm to 5 mm, and more preferably 1 mm to 3 mm.

An expansion ratio of the expanded particles is not particularly limited, and can be, for example, 3 times to 90 times. From the viewpoint of mechanical strength and moldability, the expansion ratio is preferably 5 times to 60 times, and more preferably 5 times to 45 times.

Such expanded particles are sold under trade names such as EPERAN-PP and EPERAN-XL (both of which are available from Kaneka Corporation) and are easily available.

The in-mold foamed molded product 3 made of thermoplastic resin expanded particles is molded by heating thermoplastic resin expanded particles with use of an in-mold foam molding mold so that the thermoplastic resin expanded particles are expanded and fused to each other. The details of in-mold foam molding will be described below.

The in-mold foam molding mold includes (i) a concave mold unit having a concave mold and a concave mold housing which holds the concave mold and (ii) a convex mold unit having a convex mold and a convex mold housing which holds the convex mold. The concave mold and the convex mold form a molding space when closed together. The thermoplastic resin expanded particles are filled into the molding space. The expanded particles may be expanded particles having an inorganic gas or the like impregnated therein beforehand so as to increase internal pressure, or may be expanded particles which are at atmospheric pressure and not internally pressurized. After the thermoplastic resin expanded particles are filled into the molding space, saturated steam pressure of approximately 0.04 MPa(G) to 0.40 MPa(G) (gauge pressure) is supplied into each of chambers, which are respectively provided in the concave mold housing and in the convex mold housing, to heat the thermoplastic resin expanded particles so that the thermoplastic resin expanded particles are expanded and fused to each other. In this way, the in-mold foamed molded product 3 is obtained by in-mold foam molding of the thermoplastic resin expanded particles.

The vehicle seat core material 2 is obtained by providing the insert material 4 to the convex mold or the concave mold of the in-mold foam molding mold and carrying out the above technique for in-mold foam molding so that the in-mold foamed molded product 3 is molded integrally with the insert material 4. A molding mold for producing the vehicle seat core material 2 is preferably a molding mold for the vehicle seat core material 2 (described later). With the use of the molding mold for the vehicle seat core material 2, it is possible to easily produce the vehicle seat core material 2.

A material of the insert material 4 may be any of a variety of materials, and is preferably a material having a high tensile strength. This is because the insert material 4 is embedded in the vehicle seat core material 2 which need to have strength and rigidity. Examples of the material having a high tensile strength include metal, engineering plastic, inorganic fiber (carbon fiber, glass fiber, and the like), fiber reinforced plastic (carbon fiber reinforced plastic, glass fiber reinforced plastic, and the like), and fiber reinforced metal. Out of these examples, the material of the insert material is more preferably a metal. This is because the metal has low adhesiveness to thermoplastic resin expanded particles. The insert material 4 can be, for example, in the shape of, but not limited to, a line, a rod, or a pipe. The insert material 4 is preferably in the shape of a pipe. In a case where the insert material 4 is in the shape of a pipe, the insert material 4 achieves light weight while maintaining its strength.

Particularly, the insert material 4 is more preferably an iron wire from the viewpoint of availability and ease of processing. The iron wire is more likely to undergo corrosion. To prevent the occurrence of corrosion, it is preferable that anti-corrosive coating is applied to the surface of the iron wire.

The diameter of the insert material 4 is not particularly limited, and is preferably as small as possible in order to reduce the weight of the vehicle seat core material 2. Specifically, the diameter of the insert material 4 is preferably 2 mm to 20 mm, more preferably 3 mm to 13 mm, and even more preferably 3 mm to 5 mm. The "diameter of the insert material 4" as used herein is intended to mean a length of the longest line segment among the line segments each of which is obtained by connecting two points on a rim (perimeter) of a cross section of the insert material 4 which cross section is vertical to a direction in which the insert material 4 extends (i.e., in a direction of the length of the insert material 4).

### [Embodiment 1]

A vehicle seat core material 2 in accordance with Embodiment 1 of the present invention will be described with reference to Figs. 2 to 6.

Fig. 2 is a plan view of the vehicle seat core material 2 in accordance with Embodiment 1 of the present invention when viewed from a vehicle attachment surface 3b side (i.e., a lower side of Fig. 1).

As illustrated in Fig. 2, the vehicle seat core material 2 has a hollow space 7 in a surface of the in-mold foamed molded product 3 on the vehicle attachment surface 3b side, and has an insert material exposed portion 8, which is an exposed portion of the insert material 4 in the hollow space 7. In Embodiment 1, as an example, the hollow space 7 is provided in the vehicle attachment surface 3b of the in-mold foamed molded product 3. Note, however, that a similar configuration is employed for the hollow space 7 even in a case where the hollow space 7 is provided in a surface other than the vehicle attachment surface 3b of the in-mold foamed molded product 3. Here, the hollow space 7 means a space formed by hollowing the in-mold foamed molded product 3 and can be expressed as a blind hole having a bottom surface. Out of inside walls defining the space 7, walls connecting the surface (vehicle attachment surface 3b or the like) of the in-mold foamed molded product 3 are referred to as "side walls of the hollow space 7" and a wall connecting the "side walls of the hollow space 7" is referred to as "bottom of the hollow space 7".

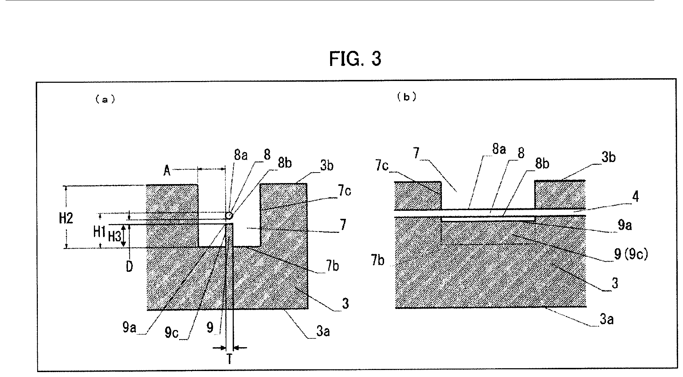

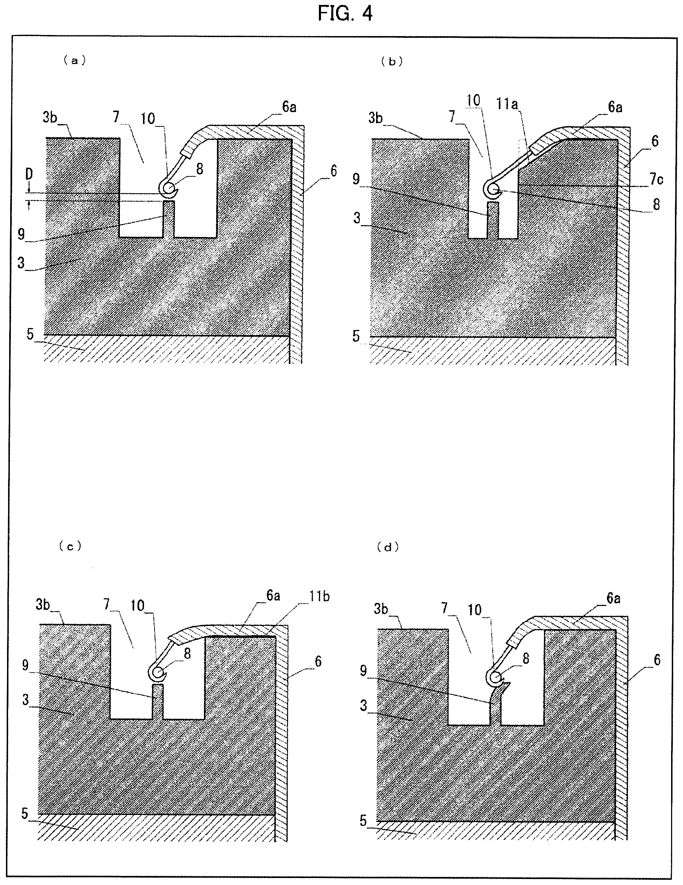

(a) of Fig. 3 is a cross-sectional view of the vehicle seat core material 2 taken along line X-X in Fig. 2, and (b) of Fig. 3 is a cross-sectional view of the vehicle seat core material 2 taken along line Y-Y in Fig. 2. The vehicle seat core material 2 has a protrusion 9. The protrusion 9 is provided on a bottom 7b of the hollow space 7 and protrudes through the bottom 7b toward the insert material exposed portion 8. The protrusion 9 and the insert material exposed portion 8 are not coupled to each other. There is a gap (D) between an upper surface 9a of the protrusion 9 and a lower end portion 8b of the insert material exposed portion 8. This configuration allows the surface cover 6 to be easily coupled to the vehicle seat core material 2. This is because it is possible to easily couple a coupler 10 for the surface cover 6 to the insert material exposed portion 8 by putting the coupler 10 in the gap (D) as illustrated in (a) of Fig. 4. The presence of the gap (D) allows coupling of the coupler 10 to the insert material exposed portion 8 to be a simple and quick operation. Moreover, the above configuration enables coupling of the coupler 10 to the insert material exposed portion 8 without the need to make the protrusion 9 pierced with the coupler 10. Thus, in a case where the coupler 10 is coupled at a wrong coupling position, the coupler 10 can be detached from the insert material exposed portion 8 and easily coupled to the insert material exposed portion 8 again. Note that "couple" is synonymous with "attach". Put it another way, easy coupling and an easy coupling operation mean that detachment can be carried out easily.

In the present specification, the state in which "there is a gap (D) between an upper surface 9a of the protrusion 9 and a lower end portion 8b of the insert material exposed portion 8" is intended to mean a state in which the protrusion 9 and the insert material exposed portion 8 are separated from each other and also means that the insert material exposed portion 8 never moves when the protrusion 9 undergoes deformation. That is, the protrusion 9 and the insert material exposed portion 8 are not molded integrally, and can be moved independently of each other by external pressure or the like when they are in contact with each other. Thus, the state in which "there is a gap (D) between an upper surface 9a of the protrusion 9 and a lower end portion 8b of the insert material exposed portion 8" translates into a state in which the insert material exposed portion 8 is completely uncovered, and encompasses a case where the upper surface 9a of the protrusion 9 and the lower end portion 8b of the insert material exposed portion 8 are in contact with each other, but are not connected to each other. Thus, the gap (D) is 0 or greater (D ≥ 0 mm). Note that in Embodiment 1, the protrusion 9 and the insert material exposed portion 8 need to be separable from each other. Hence, a configuration in which the insert material exposed portion 8 is surrounded entirely by the protrusion 9, in other words, a configuration in which the insert material exposed portion 8 is embedded in the protrusion 9, is not encompassed by Embodiment 1 even though such a configuration is a configuration in which there is a space between the protrusion 9 and the insert material exposed portion 8.

Usually, the protrusion 9 shaped as described above is often treated as a burr and removed, from the viewpoint of the aesthetic appearance of a product. In Embodiment 1, the protrusion 9 is provided in the hollow space 7. This allows the protrusion 9 to be less noticeable outwardly and eliminates the possibility that the protrusion 9 impairs the aesthetic appearance of the product. Therefore, it is not necessary to remove the burr (i.e., the protrusion 9), and it is not necessary to provide any special mold structure for preventing the formation of burrs. Thus, an embodiment of the present invention has an advantage in that it is possible to provide a vehicle seat core material that can be produced by a simple mold structure.

An example structure of a mold for molding the vehicle seat core material 2 is illustrated in Fig. 9. As illustrated in Fig. 9, the mold for molding the vehicle seat core material 2 includes a convex mold 12 and a concave mold 13, both of which are included in an in-mold foam molding mold, and the convex mold 12 and the concave mold 13 form a molding space 14. A forming section 15 is provided so as to protrude through the surface of the convex mold 12 toward the molding space 14, and the forming section 15 has a groove 16. The forming section 15 forms the hollow space 7. The insert material exposed portion 8 is placed in the groove 16. The thermoplastic resin expanded particles enter the groove 16 except for a position where the insert material exposed portion 8 is placed, and the thermoplastic resin expanded particles are fused to each other. In this way, the protrusion 9 is formed. With the simple-structure mold for molding the vehicle seat core material 2 as illustrated in Fig. 9, it is possible to easily produce the vehicle seat core material 2 that includes: the hollow space 7 provided in the surface of the in-mold foamed molded product 3; the insert material exposed portion 8, which is an exposed portion of the insert material 4, provided in the hollow space 7; the protrusion 9 protruding through the bottom 7b of the hollow space 7 toward the insert material exposed portion 8; and the gap (D) provided between the insert material exposed portion 8 and the protrusion 9. Note that the forming section 15 may be provided integrally with the convex mold 12 or may be provided independently of the convex mold 12. Alternatively, the forming section 15 may be provided on the concave mold 13.

The hollow space 7 is at least one hollow space provided in the surface of the in-mold foamed molded product 3. Accordingly, the insert material exposed portion 8 provided in the hollow space 7 is at least one insert material exposed portion provided in the surface of the in-mold foamed molded product 3. The hollow space 7 can be easily formed by transference to the in-mold foamed molded product 3 the shape of the forming section 15 provided in the mold for molding the vehicle seat core material 2 during molding of the in-mold foamed molded product 3.

The number and size of the hollow space 7 are adjusted as appropriate according to the size of the vehicle seat core material 2, a desired strength and cushioning property of the vehicle seat core material 2. The hollow space 7 is preferably plural in number to ensure that the surface cover 6 is secured to the vehicle seat core material 2. The size of the hollow space 7 is preferably large in consideration of the ease with which the coupler 10 for the surface cover 6 is coupled and fixed to the insert material exposed portion 8. However, a larger number of the hollow space 7 and a larger size of the hollow space 7 may lead to lower strength and lower cushioning property of the vehicle seat core material 2. From the viewpoint of the ease with which the coupler 10 is coupled and fixed and the strength and cushioning property of the vehicle seat core material 2, (1) the number of the hollow space 7 is preferably not less than 4 and not more than 35, and more preferably not less than 10 and not more than 25, and (2) a perimeter of the hollow space 7 in the surface (surface of the vehicle attachment surface 3b) of the in-mold foamed molded product 3 is preferably not less than 30 mm and not more than 300 mm, and more preferably not less than 60 mm and not more than 150 mm. Here, the "perimeter of the hollow space 7 in the surface of the in-mold foamed molded product 3" can translate into a "length of the side walls defining the space 7, when the space 7 in the surface of the in-mold foamed molded product 3 having the space 7 provided therein is viewed from a side opposite the bottom of the space 7". The depth of the hollow space 7 is preferably set to a depth such that the coupler 10 fixed to the insert material exposed portion 8 does not jut out of the hollow space 7 as illustrated in (a) of Fig. 4.

Further, as illustrated in (b) of Fig. 4, the hollow space 7 may be provided with a cutout 11a to prevent the coupler 10 from jutting out of the hollow space 7. A broken line indicates a configuration without the cutout 11a. With the cutout 11a, it is possible to prevent the coupler 10 from contacting a side wall 7c of the hollow space 7. In the cases illustrated in (a) of Fig. 4 and in (b) of Fig. 4, a surface cover 6a provided on the vehicle attachment surface 3b side sticks out from the vehicle attachment surface 3b by the thickness of the surface cover 6a. To prevent the surface cover 6a from sticking out, for example, a cutout 11b having a depth corresponding to the thickness of the surface cover 6a may be provided on the vehicle attachment surface 3b side of the in-mold foamed molded product 3 as illustrated in (c) of Fig. 4. Further, in a case where the surface cover 6a provided on the vehicle attachment surface 3b side is replaced by a connecting member that connects the surface cover 6 and the coupler 10, instead of the surface cover 6, the shape of the cutout 11b is preferably changed as necessary in conformity with the connecting member. In other words, the cutout 11b can be configured so as not to cause the surface cover 6a and/or the connecting member to stick out from the surface of the vehicle attachment surface 3b. The cutouts 11a and 11b can be formed by cutting which is carried out as post-processing and/or by transfer of a mold for molding the vehicle seat core material 2. The cutouts 11a and 11b are preferably formed by transference of the mold for molding the vehicle seat core material 2 since the transference does not cause cut pieces.

The shape of the hollow space 7 (shape formed by the side walls defining the space 7, when the space 7 in the surface of the in-mold foamed molded product 3 having the space 7 provided therein is viewed from a side opposite the bottom of the space 7) is not limited to any particular shape. The shape of the hollow space 7, when viewed from the vehicle attachment surface 3b side, is preferably a substantially quadrangular shape or a substantially circular shape, from the viewpoint of the ease with which the in-mold foamed molded product 3 is ejected from the mold for molding the vehicle seat core material 2.

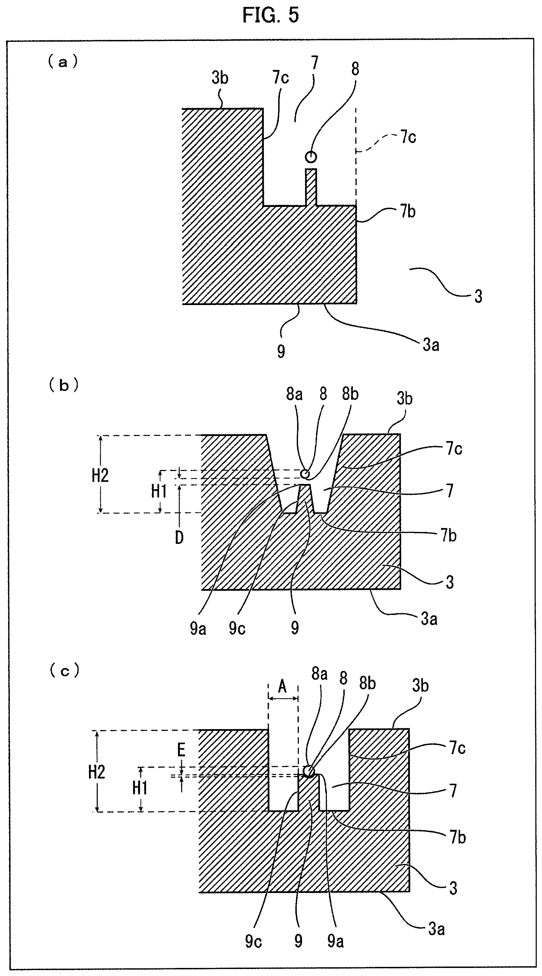

A variation of the hollow space 7 and a variation of the protrusion 9 are described with reference to Fig. 5. Note that in the present specification, the hollow space 7 is assumed to be a hollow on the vehicle attachment surface 3b. Fig. 5 is a cross-sectional view illustrating an example configuration of another hollow space 7 and an example configuration of another protrusion 9, in accordance with Embodiment 1 of the present invention. The hollow space 7 may be provided in the surface of the in-mold foamed molded product 3 as illustrated in (a) of Fig. 3, or may be provided at an end of the surface of the in-mold foamed molded product 3 such that some of the side walls 7c is missing, as illustrated in (a) of Fig. 5. A broken line in (a) of Fig. 5 indicates a missing side wall 7c of the hollow space 7. The cross-sectional shape of the hollow space 7 (cross sectional shape of the hollow space 7 taken along line X-X in Fig. 2) is not limited to any particular shape, and may be a substantially quadrangular shape as illustrated in (a) of Fig. 3. Alternatively, the cross-sectional shape of the hollow space 7 may be a shape such that a distance between the opposite side walls 7c of the hollow space 7 decreases with increasing proximity to the bottom 7b of the hollow space 7 from the surface of the in-mold foamed molded product 3 (i.e., a tapered shape), as illustrated in (b) of Fig. 5.

The cross-sectional shape of the protrusion 9 (cross sectional shape of the protrusion 9 taken along line X-X in Fig. 2) is not limited to any particular shape, and may be a substantially quadrangular shape as illustrated in (a) of Fig. 3. Alternatively, the cross-sectional shape of the protrusion 9 may be a shape such that a distance between opposite side walls 9c of the protrusion 9 decreases with increasing proximity to the insert material exposed portion 8 from the bottom 7b of the hollow space 7 (i.e., a tapered shape), as illustrated in (b) of Fig. 5. The configuration in which the cross-sectional shape of the hollow space 7 and the cross-sectional shape of the protrusion 9 are shapes such as those illustrated in (b) of Fig. 5 provides an advantage in that the in-mold foamed molded product 3 is easily produced. This is because the side walls 7c of the hollow space 7 and the side walls 9c of the protrusion 9, both of which have the above-described shapes, act as a draft at the ejection of the in-mold foamed molded product 3 from the mold for molding the vehicle seat core material 2. The cross-sectional shape of the protrusion 9 (cross sectional shape of the protrusion 9 taken along line X-X in Fig. 2) may be a shape such that the protrusion 9 covers a portion of the insert material exposed portion 8, as illustrated in (c) of Fig. 5. Even in such a configuration, the protrusion 9 and the insert material exposed portion 8 are in a state of being separated. Thus, it can be said that there is a gap (D) between the upper surface 9a of the protrusion 9 and the lower end portion 8b of the insert material exposed portion 8. Here, in (c) of Fig. 5, the area of the insert material exposed portion 8 covered by the protrusion 9 is denoted by a length (E) of a perpendicular line from the upper surface 9a of the protrusion 9 to the lower end portion 8b of the insert material exposed portion 8. The length (E) of the perpendicular line from the upper surface 9a of the protrusion 9 to the lower end portion 8b of the insert material exposed portion 8 is preferably equal to or below a radius of the insert material exposed portion 8, in order to facilitate coupling of the coupler 10 to the insert material exposed portion 8.

From the viewpoint of the ease with which the in-mold foamed molded product 3 is ejected from the mold for molding the vehicle seat core material 2, the cross-sectional shape of the hollow space 7 is preferably a substantially quadrangular shape, and particularly preferably a shape such that the hollow space 7 is tapered with increasing proximity to the bottom 7b of the hollow space 7 from the surface of the in-mold foamed molded product 3. From the viewpoint of the ease with which the in-mold foamed molded product 3 is ejected from the mold for molding the vehicle seat core material 2, the cross-sectional shape of the protrusion 9 is preferably a substantially quadrangular shape, and particularly preferably a shape such that the protrusion 9 is tapered with increasing proximity to the insert material exposed portion 8 from the bottom 7b of the hollow space 7.

In the hollow space 7, the coupler 10 is coupled to the insert material exposed portion 8 by being hung on the insert material exposed portion 8. This is considered to be achieved by the following two configurations: (Configuration 1) a configuration in which, as illustrated in (a) of Fig. 4, the coupler 10 for the surface cover 6 is put in the gap (D) without deforming the protrusion 9; and (Configuration 2) a configuration in which, as illustrated in (d) of Fig. 4, the coupler 10 for the surface cover 6 is put in the gap (D) by deforming the protrusion 9 at a position corresponding to the gap (D) as a base point. Either the configuration 1 or the configuration 2 may be employed. The configuration 1 brings about the effect of facilitating coupling of the coupler 10 to the insert material exposed portion 8 and detachment of the coupler 10 from the insert material exposed portion 8. The configuration 2 allows the coupler 10 to be sandwiched between the protrusion 9 and the insert material exposed portion 8 so that the coupler 10 is fixed to the insert material exposed portion 8, and thus brings about the effect of more firmly fixing the coupler 10 to the insert material exposed portion 8. These configurations allow the coupler 10 to be coupled to the insert material exposed portion 8 without the need to pierce the protrusion 9 with the coupler 10. Thus, it is possible to hang the coupler 10 on the insert material exposed portion 8 quickly and easily without breaking (or cutting) the protrusion 9. Further, in the configuration 2, the protrusion 9 is preferably flexible.

The size of the gap (D) is not limited to any particular size, and may be 0 mm, provided that the protrusion 9 and the insert material exposed portion 8 are in a state of being separated (not connected to each other). In other words, the protrusion 9 and the insert material exposed portion 8 may be in contact with each other, provided that they are not bonded to each other with an adhesive or they are not fused together. From the viewpoint of the ease with which the coupler 10 is coupled to the insert material exposed portion 8, the size of the gap (D) is preferably more than 0 mm, and more preferably not less than 0.1 mm. Further, in the case of carrying out the configuration in which the coupler 10 for the surface cover 6 is put in the gap (D) without deforming the protrusion 9 as illustrated in (a) of Fig. 4, the size of the gap (D) is more preferably equal to or greater than the thickness of the coupler 10. In the case of carrying out the configuration in which the coupler 10 for the surface cover 6 is put in the gap (D) by deforming the protrusion 9 at a position corresponding to the gap (D) as a base point as illustrated in (d) of Fig. 4, the size of the gap (D) is more preferably less than the thickness of the coupler 10.

Examples of a method of forming the gap (D) include the following methods (1) and (2): (1) a method in which the gap (D) is formed by adjusting the amount of thermoplastic resin expanded particles charged into the groove 16, which forms the protrusion 9, of the forming section 15 of the mold for molding the vehicle seat core material 2; and (2) a method in which the gap (D) is formed by shrinkage of the in-mold foamed molded product 3 and the protrusion 9. The shrinkage in the method (2) occurs in the following process. The in-mold foamed molded product 3 immediately after ejected from the mold for molding the vehicle seat core material 2 has a high temperature. Thereafter, when the in-mold foamed molded product 3 is cooled at an ambient temperature to reach the ambient temperature, the in-mold foamed molded product 3 and the protrusion 9 are shrunk. This makes it possible to form the gap (D) as long as the protrusion 9 and the insert material exposed portion 8 are not connected to each other even in a case where the gap (D) of the in-mold foamed molded product 3 immediately after the ejection is 0 mm. In a case where the gap (D) is formed by the method (2), the thermoplastic resin expanded particles making up the in-mold foamed molded product 3 is preferably a resin containing at least polyolefin resin such as polyolefin resin or styrene-modified polyolefin resin, and a material for the insert material is preferably a metal. This is because the resin containing polyolefin resin has low adhesiveness to a metallic insert material, thus making the protrusion 9 less likely to be connected to the insert material exposed portion 8 when the protrusion 9 comes into contact with the insert material exposed portion 8. For this reason, it is possible to ensure that the gap (D) is formed.

A space distance (A), illustrated in (a) of Fig. 3, between the side wall 9c of the protrusion 9 and the side wall 7c of the hollow space 7 is preferably set to be equal to or greater than a distance within which the coupler 10 for the surface cover 6 can be put in the gap (D). From the viewpoint of the ease with which the coupler 10 is coupled to the insert material exposed portion 8, the space distance (A) is preferably not less than 1 mm, and more preferably not less than 5 mm. The upper limit of the space distance (A) is not particularly limited since the upper limit of the space distance (A) is set according to the size of the hollow space 7.

The thickness (T), illustrated in (a) of Fig. 3, of the protrusion 9 is not limited to any particular thickness. The thickness (T) of the protrusion 9 is preferably equal to or greater than a diameter of the insert material exposed portion 8, and more preferably equal to the diameter of the insert material exposed portion 8. The upper limit of the thickness (T) of the protrusion 9 is not particularly limited since the upper limit of the thickness (T) is determined according to the size of the hollow space 7 and the space distance (A).

The coupler 10 is not particularly limited, provided that the coupler 10 is shaped to be hung on the insert material exposed portion 8. The coupler 10 is preferably shaped in a hook in consideration of the ease with the coupler 10 is hung on the insert material exposed portion 8. For example, in a case where the coupler 10 is a ring-shaped hook (in the shape of a carabiner) having an openable / closable part, the coupler 10 is less likely to become detached from the insert material exposed portion 8. The coupler 10 does not necessarily have to be a coupler with a sharply pointed tip. The coupler 10 is preferably a coupler with a sharply pointed tip in consideration of the ease with which the coupler 10 is put in the space (D). A material for the coupler 10 may be any of a variety of materials. The material for the coupler 10 is preferably strong against breakage (i.e., has a high tensile strength). Examples of such a material include metals and resins.

The insert material exposed portion 8 and the protrusion 9 are present in the hollow space 7, as illustrated in (a) of Fig. 3. Specifically, a length (H1) of a perpendicular line from the bottom 7b of the hollow space 7 to an upper end portion 8a of the insert material exposed portion 8 and a length (H2) of a perpendicular line from the bottom 7b of the hollow space 7 to an upper surface (vehicle attachment surface 3b) around the hollow space 7 satisfy the following equation (1): H1 < H2 ... (1). Note that in a case where two or more values are shown by the definition of each of the lengths (H1, H2) of the perpendicular lines, the largest value out of the two or more values is used as each of the lengths (H1, H2) of the perpendicular lines.

A height (H3), illustrated in (a) of Fig. 3, of the protrusion 9 (i.e., a length of a perpendicular line from the bottom 7b of the hollow space 7 to the upper surface 9a of the protrusion 9) can be any value that is larger than 0 mm. Further, in order to make the protrusion 9 and the insert material exposed portion 8 separated from each other, the upper limit of the height (H3) of the protrusion 9 can be any value that is equal to or less than the length (H1) of the perpendicular line from the bottom 7b of the hollow space 7 to the upper end portion 8a of the insert material exposed portion 8. The following will consider a case where a portion of the insert material exposed portion 8 is covered by the protrusion 9 as illustrated in (c) of Fig. 5, i.e. a case where the length (E) of the perpendicular line from the upper surface 9a of the protrusion 9 to the lower end portion 8b of the insert material exposed portion 8 is greater than 0. In such a case, in order to facilitate coupling of the coupler 10 to the insert material exposed portion 8, the height (H3) of the protrusion 9 is preferably closer to a value obtained by subtracting the radius of the insert material exposed portion 8 from the length (H1) of the perpendicular line from the bottom 7b of the hollow space 7 to the upper end portion 8a of the insert material exposed portion 8. Note that in a case where two or more values are shown by the definition of each of the lengths (H1, H3) of the perpendicular lines, the largest value out of the two or more values is used as each of the lengths (H1, H3) of the perpendicular lines.

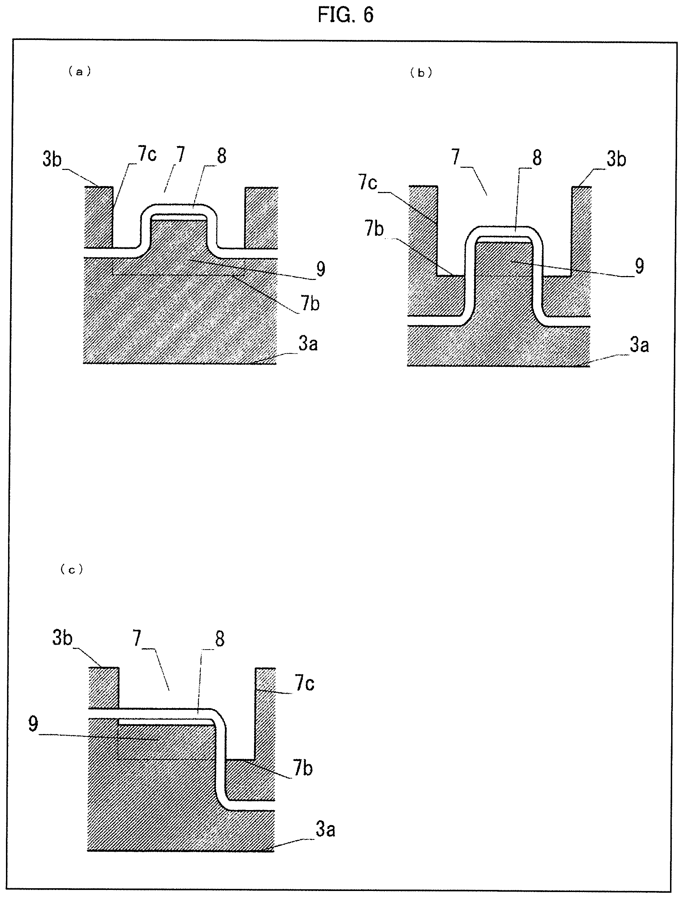

The insert material exposed portion 8 is formed by making the linear insert material 4 exposed in the hollow space 7 in such a manner that the insert material 4 juts out of the side wall 7c of the hollow space 7 as illustrated in (b) of Fig. 3. Alternatively, the insert material exposed portion 8 may be constituted by an insert material 4 having one or more flection points as illustrated in (a) of Fig. 6. Alternatively, the insert material exposed portion 8 may be formed by making the insert material 4 exposed in such a manner that the insert material 4 juts out of the bottom 7b of the hollow space 7 as illustrated in (b) of Fig. 6, or the insert material exposed portion 8 may be formed by making the insert material 4 exposed in such a manner that the insert material 4 juts out of both the bottom 7b of the hollow space 7 and the side wall 7c of the hollow space 7 as illustrated in (c) of Fig. 6.

### [Embodiment 2]

The following will describe another embodiment of the present invention. For convenience of explanation, members having the same functions as those described in Embodiment 1 are given the same reference numerals, and explanations thereof are omitted here.

A vehicle seat core material 2 in accordance with Embodiment 2 will be described with reference to Fig. 7.

The hollow space 7 in Embodiment 2 is provided in at least one of the surfaces of the in-mold foamed molded product 3, i.e. the seat surface 3a, the vehicle attachment surface 3b, and side surface 3c, in such a position as not to face parts of a passenger's body. In Fig. 7, as an example, the hollow space 7 is provided in the vehicle attachment surface 3b of the in-mold foamed molded product 3. Note, however, that a similar configuration is employed for the hollow space 7 even in a case where the hollow space 7 is provided in a surface other than the vehicle attachment surface 3b of the in-mold foamed molded product 3. According to this configuration, the hollow space 7 is provided in the surfaces of the in-mold foamed molded product 3 in such a position as not to face the parts of the passenger's body. This prevents the hollow space 7 from reducing the cushioning property in a passenger's position in the vehicle seat, and thus does not make the passenger feeling uncomfortable.

### [Embodiment 3]

The following will describe still another embodiment of the present invention. For convenience of explanation, members having the same functions as those described in Embodiments 1 and 2 are given the same reference numerals, and explanations thereof are omitted here. A vehicle seat core material 2 in accordance with Embodiment 3 will be described with reference to Fig. 10.

A vehicle seat core material 2 in accordance with Embodiment 3 differs from those in accordance with Embodiments 1 and 2 in that a hollow space 7 is provided in any of the surfaces of the in-mold foamed molded product 3, i.e. a seat surface 3a, a vehicle attachment surface 3b, and side surface 3c, in such a position as not to face parts of a body of a passenger 17 when the passenger 17 rides. (a) to (c) of Fig. 10 are views schematically illustrating a state in which passengers 17 sit in a vehicle seat 1 which includes the vehicle seat core material 2 in accordance with Embodiment 3. In (a) to (c) of Fig. 10, two passengers 17 sit in the vehicle seat 1 and look in a direction indicated by an arrow pointing from "B" to "F". "B" represents a back side of the passengers 17, and "F" represents a front side of the passengers 17. The parts of the body of the passenger 17 illustrated in (a) of Fig. 10 are a head 17a, a body part 17b, and a leg 17c of the passenger 17, and those illustrated in (b) and (c) of Fig. 10 are the body part 17b and the leg 17c of the passenger 17. Note that the body part 17b of the passenger 17 includes a hip of the passenger 17.

In Fig. 10, five hollow spaces 7 are provided along each of two sides in a longer side direction of the in-mold foamed molded product 3. As illustrated in (b) of Fig. 10, on the front (F) side of the passenger 17 out of the two sides in the longer side direction of the in-mold foamed molded product 3, the hollow spaces 7 are provided in the vehicle attachment surface 3b of the in-mold foamed molded product 3 in the longer side direction of the in-mold foamed molded product 3. Further, on the back (B) side of the passenger 17 out of the two sides in the longer side direction of the in-mold foamed molded product 3, the hollow spaces 7 are provided in the seat surface 3a of the in-mold foamed molded product 3 in the longer side direction of the in-mold foamed molded product 3. That is, all of the hollow spaces 7 provided along the two sides in the longer side direction of the in-mold foamed molded product 3 are provided in the surfaces of the in-mold foamed molded product 3 in such a position as not to face the parts of the body of the passenger 17 (specifically, the body part 17b and the leg 17c).

Further, in Fig. 10, two hollow spaces 7 are provided on each of two sides in a shorter side direction of the in-mold foamed molded product 3. As illustrated in (c) of Fig. 10, in the shorter side direction of the in-mold foamed molded product 3, the hollow spaces 7 are provided in the side surface 3c of the in-mold foamed molded product 3 in the shorter side direction of the in-mold foamed molded product 3. That is, all of the hollow spaces 7 provided along the two sides in the shorter side direction of the in-mold foamed molded product 3 are provided in the surfaces of the in-mold foamed molded product 3 in such a position as not to face the parts of the body of the passenger 17 (specifically, the body part 17b and the leg 17c).

As described above, the vehicle seat core material 2 in accordance with Embodiment 3 of the present invention includes the hollow spaces 7 provided in the surfaces of the in-mold foamed molded product 3 in such a position as not to face the parts of the body of the passenger 17. This prevents the hollow space 7 from reducing the cushioning property in a position where the passenger 17 sits in the vehicle seat 1, and thus provide the advantage of not making the passenger 17 feel uncomfortable.

The hollow spaces 7 are located most preferably in the vehicle attachment surface 3b of the in-mold foamed molded product 3. This is because there is virtually no possibility that the vehicle attachment surface 3b, which faces a vehicle, faces the parts of the body of the passenger 17, and a comfort of the passenger 17 sitting in the vehicle seat 1 thus does not decrease for a long period of time without depending on a manner in which the passenger 17 sits. Therefore, this configuration provides the advantage of not making the passenger 17 feel uncomfortable for a long period of time.

Aspects of the present invention can also be expressed as follows:
A vehicle seat core material 2 in accordance with an embodiment of the present invention is a vehicle seat core material 2 constituted by an in-mold foamed molded product 3 which is made of expanded particles of a thermoplastic resin and is embedded with an insert material 4, the vehicle seat core material 2 including: a hollow space 7 provided in a surface of the in-mold foamed molded product 3; an insert material exposed portion 8 provided in the hollow space 7, the insert material exposed portion 8 being an exposed portion of the insert material 4; a protrusion 9 provided at a bottom 7b of the hollow space 7 so as to protrude through the bottom 7b of the hollow space 7 toward the insert material exposed portion 8; and a gap (D) provided between the insert material exposed portion 8 and the protrusion 9.

According to the above configuration, the vehicle seat core material 2 includes, in the hollow space 7 of the in-mold foamed molded product 3, the insert material exposed portion 8 and the protrusion 9, and the gap (D) is provided between the insert material exposed portion 8 and the protrusion 9. Thus, the above configuration allows the surface cover 6 to be easily coupled to the vehicle seat core material 2. This is because it is possible to easily couple a coupler 10 for the surface cover 6 to the insert material exposed portion 8 by putting the coupler 10 in the gap (D).

Further, according to the above configuration, the vehicle seat core material 2 includes the protrusion 9 in the hollow space 7. Thus, it is not necessary to remove the protrusion 9 as a burr from the viewpoint of aesthetic appearance of a product. Thus, the above configuration has an advantage of enabling production with use of a mold with a simple structure.

A vehicle seat core material 2 in accordance with an embodiment of the present invention is preferably configured such that the hollow space 7 is provided in the surface of the in-mold foamed molded product 3 in such a position as not to face parts of a body of a passenger 17.

The above configuration eliminates decrease in sitting comfort of the vehicle seat 1 and thus has an advantage of not making the passenger 17 feel uncomfortable.

A vehicle seat core material 2 in accordance with an embodiment of the present invention is preferably configured such that the hollow space 7 is provided in a vehicle attachment surface 3b of the in-mold foamed molded product 3.

According to the above configuration, a comfort of the passenger 17 sitting in the vehicle seat 1 does not decrease for a long period of time without depending on a manner in which the passenger 17 sits. The above configuration thus has an advantage of not making the passenger 17 feel uncomfortable for a long period of time.

A vehicle seat core material 2 in accordance with an embodiment of the present invention is preferably configured such that a space distance (A) between a side wall 9c of the protrusion 9 and a side wall 7c of the hollow space 7 is not less than 1 mm.

The above configuration has an advantage of facilitating coupling of the coupler 10 for the surface cover 6 to the insert material exposed portion 8.

A vehicle seat core material 2 in accordance with an embodiment of the present invention is preferably configured such that a perimeter of the hollow space 7 in the surface of the in-mold foamed molded product 3 is not less than 30 mm and not more than 300 mm.

The above configuration has an advantage of facilitating coupling of the coupler 10 for the surface cover 6 to the insert material exposed portion 8 and an advantage of obtaining the vehicle seat core material 2 having a desired strength and a desired cushioning property.

A vehicle seat core material 2 in accordance with an embodiment of the present invention is preferably configured such that the thermoplastic resin is a resin containing at least a polyolefin resin.

The above configuration has an advantage of facilitating formation of the gap (D) between the insert material exposed portion 8 and the protrusion 9.

A vehicle seat core material 2 in accordance with an embodiment of the present invention is preferably configured such that a material of the insert material 4 is a metal.

The above configuration has an advantage of facilitating formation of the gap (D) between the insert material exposed portion 8 and the protrusion 9.

Further, a mold for molding a vehicle seat core material 2 in accordance with an embodiment of the present invention is a mold for molding a vehicle seat core material 2, the mold being configured to form, in the vehicle seat core material 2 constituted by an in-mold foamed molded product 3 which is made of expanded particles of a thermoplastic resin and is embedded with an insert material 4, (i) a hollow space 7 provided in a surface of the in-mold foamed molded product 3, (ii) an insert material exposed portion 8 provided in the hollow space 7, the insert material exposed portion 8 being an exposed portion of the insert material 4, (iii) a protrusion 9 protruding through a bottom 7b of the hollow space 7 toward the insert material exposed portion 8, and (iv) a gap (D) provided between the insert material exposed portion 8 and the protrusion 9, the mold including: a forming section 15 protruding through a surface of the mold for molding the vehicle seat core material 2 toward a molding space 14; and a groove 16, provided in the forming section 15, where the insert material exposed portion 8 is to be placed and where the expanded particles of the thermoplastic resin are to enter.

The above configuration achieves the vehicle seat core material 2 which allows for easy and quick coupling of the surface cover 6 of the vehicle seat 1. Further, the above configuration also has an advantage of easily producing the vehicle seat core material 2. In other words, a molded product produced with use of the mold for molding the vehicle seat core material 2 having the above configuration can be used as the vehicle seat core material 2 without the need for an additional work including insertion of the insert material 4, formation of the hollow space, and removal of the protrusion.

Further, a method of producing a vehicle seat core material 2 in accordance with an embodiment of the present invention, including the step of using the above-described mold for molding a vehicle seat core material 2 to produce the vehicle seat core material 2 constituted by an in-mold foamed molded product 3 which is made of expanded particles of a thermoplastic resin and is embedded with an insert material 4.

The above configuration achieves the vehicle seat core material 2 which allows for easy and quick coupling of the surface cover 6 of the vehicle seat 1.

The present invention is not limited to the embodiments, but can be altered by a skilled person in the art within the scope of the claims. The present invention also encompasses, in its technical scope, any embodiment derived by combining technical means disclosed in differing embodiments. The following description will utilize Examples to discuss embodiments of the present invention in further detail. Note, however, that the present invention is not limited to these Examples.

### Examples

As examples of a vehicle seat core material 2 in accordance with an embodiment of the present invention, insert material exposed portions 8 in Examples 1 and 2 and insert material exposed portions 8 in Comparative Examples 1 to 3 were each formed in an in-mold foamed molded product 3 in which an insert material 4 was embedded. Note that the in-mold foamed molded product 3 had a substantially quadrangular shape measuring 600 mm in width, 1300 mm in length, and 60 mm in thickness, as illustrated in Fig. 1, and the insert material 4 was made of an iron wire having a diameter of 4.5 mm and had a substantially quadrangular annular shape measuring 500 mm in width and 1200 mm in length. Thermoplastic resin expanded particles making up the in-mold foamed molded product 3 were L-EPP36 available from Kaneka Corporation (ethylene-propylene random copolymer; bulk density of 20 g/L; melting point of 146°C; internal pressure adjusted to approximately 0.1 MPa(G) by impregnating the thermoplastic resin expanded particles with a pressurized air in a pressure-resistant vessel).

### (Example 1)

A vehicle seat core material 2 was prepared with 21 hollow spaces having the same shape formed on a vehicle attachment surface 3b side of the in-mold foamed molded product 3 in line with the insert material 4 by transference of a mold for molding the vehicle seat core material 2. A perimeter of the hollow space 7 in the surface (surface of the vehicle attachment surface 3b) of the in-mold foamed molded product 3 was 100 mm. In the hollow space 7, the insert material exposed portion 8 is provided. The insert material exposed portion 8 is such that the insert material 4 is linearly exposed in the hollow space 7 in such a manner that the insert material 4 juts out of the side wall 7c of the hollow space 7 as illustrated in (b) of Fig. 3. The insert material exposed portion 8 had a length of 30 mm, the insert material exposed portion 8 had a diameter of 4.5 mm, the protrusion 9 had a thickness (T) of 4.5 mm, the protrusion 9 had a height (H3) of 5.0 mm, a space distance (A) between a side wall 9c of the protrusion 9 and a side wall 7c of the hollow space 7 was 7.75 mm, a gap (D) between the lower end portion 8b of the insert material exposed portion 8 and the upper surface 9a of the protrusion 9 measured 5.0 mm, a length (H1) of a perpendicular line from the bottom 7b of the hollow space 7 to the upper end portion 8a of the insert material exposed portion 8 was 14.5 mm, and a length (H2) of a perpendicular line from the bottom 7b of the hollow space 7 to an upper surface 3b around the hollow space 7 was 30 mm.

### (Example 2)

A vehicle seat core material 2 was prepared as in Example 1 except that the hollow spaces 7 were provided on the seat surface 3a side of the in-mold foamed molded product 3 (in such a position as not to face the parts of the body of the passenger 17).

### (Comparative Example 1)

The insert material exposed portion 8 in Example 1 was changed as follows: As illustrated in Fig. 8, the height (H3) of the protrusion 9 was set to 0 mm, that is, the protrusion 9 was not formed, and in addition, the insert material exposed portion 8 was provided in contact with the bottom 7b of the hollow space 7, that is, the length (H1) of the perpendicular line from the bottom 7b of the hollow space 7 to the upper end portion 8a of the insert material exposed portion 8 was set to 4.5 mm.

### (Comparative Example 2)

The height (H3) of the protrusion 9 in Example 1 was changed to 18 mm (> H1), and the insert material exposed portion 8 was embedded in the protrusion 9 so that no gap was left between the lower end portion 8b of the insert material exposed portion 8 and the upper surface 9a of the protrusion 9. In other words, in Comparative Example 2, an entire circumference of the insert material exposed portion 8 is surrounded by the protrusion 9. Further, the thickness (T) of the protrusion 9 was 10.0 mm, and the space distance (A) between the side wall 9c of the protrusion 9 and the side wall 7c of the hollow space 7 was 5.0 mm. Comparative Example 2 was carried out as in Example 1 except for those described above.

### (Comparative Example 3)

The hollow space 7 in Example 1 was changed to a 60-mm-long through hole passing through to reach the seat surface 3a. Note that since the bottom 7b and the protrusion 9 do not exist, the space distance (A), the gap (D), and the lengths (H1, H2) of the perpendicular lines are not defined.

### (Evaluations)

With use of the vehicle seat core materials 2 in Examples 1 and 2 and the vehicle seat core materials in Comparative Examples 1 to 3, the following evaluations (1) and (2) were carried out.

(1) A coupler 10 shaped in a hook as illustrated in (a) of Fig. 4 was fixed to the insert material exposed portion 8, and then the coupler 10 was pulled by a hand to determine a degree of fixing of the coupler 10 to the insert material exposed portion 8. The coupler 10 shaped in a hook was the one made of a 4 mm-diameter stainless steel wire and shaped in a hook with a sharply pointed tip. The coupler 10 was 15 mm in length.
(2) A cushion material 5 was placed on the seat surface 3a side of the vehicle seat core material 2, and a person sat on the cushion material 5. Note that as the cushion material 5, a 20 mm-thick low-resilience urethane cushion (available from MISUMI Corporation) formed into a shape that matches the shape of the vehicle seat core material 2 was stacked. Table 1 shows results of these evaluations. Note that evaluation criteria shown in Table 1 are as provided below.

### (Criteria for evaluation of ease of attachment)

In the evaluation (1), in fixing the coupler 10 to the insert material exposed portion 8,
Good (G): The coupler 10 was attached easily.
Poor (P): It took time and effort to attach the coupler 10 to the insert material exposed portion 8, or attachment of the coupler 10 to the insert material exposed portion 8 ended in failure.

### (Criteria for evaluation of fixed state of coupler)

In the evaluation (1), in a case where the coupler 10 fixed to the insert material exposed portion 8 was pulled by a hand,
Good (G): The coupler was not detached from the insert material exposed portion.
Poor (P): The coupler was detached from the insert material exposed portion.

### (Criteria for evaluation of sitting comfort)

In the evaluation (2), when a person sat,
Good (G): The person felt a feeling of discomfort in the hip. Unsatisfactory (U): The person felt a little feeling of discomfort in the hip.
Poor (P): The person felt a strong feeling of discomfort in the hip to such an extent that the person felt uncomfortable.

**[Table 1]**

| | Example 1 | Example 2 | Comparative Example 1 | Comparative Example 1 | Comparative Example 3 |
|---|---|---|---|---|---|
| Ease of attachment | G | G | P | P | G |
| Fixed state of coupler | G | G | P | G | G |
| Sitting comfort | G | U | G | G | P |

As shown in Table 1, Examples 1 and 2 reveal that, thanks to the gap (D), the coupler 10 was easily attached to the insert material exposed portion 8, and the coupler 10, even when pulled by a hand, was not detached from the insert material exposed portion 8. Comparative Example 3 in which the through hole was provided also shows the same result. In Comparative Example 1, no gap was provided between the insert material exposed portion 8 and the bottom 7b of the hollow space 7, and in addition, the in-mold foamed molded product made of thermoplastic resin expanded particles was not easily deformed. This prevented the coupler 10 from being put in between the insert material exposed portion 8 and the hollow space 7. Thus, instead of being attached to the insert material exposed portion 8, the coupler 10 was caught on and fixed to a portion of the insert material exposed portion 8. Thus, the coupler 10 was detached from the insert material exposed portion 8 when pulled by a hand. In Comparative Example 2 in which no gap is provided between the insert material exposed portion 8 and the upper surface 9a of the protrusion 9, it took time and effort to pierce the protrusion 9 with the coupler 10. Besides, in so doing, the protrusion 9 was broken in part, which caused broken pieces of the protrusion 9. This is considered to occur because the in-mold foamed molded product 3 was formed by fusion of the thermoplastic resin expanded particles, and piercing with the coupler 10 caused separation of fused thermoplastic resin expanded particles.

Regarding the sitting comfort, Example 2, in which the hollow space 7 was provided on the seat surface 3a side of the in-mold foamed molded product 3, brought a little feeling of discomfort in the hip. This is because cushioning property for the hip was slightly reduced when the hip was positioned immediately on the cushion material 5 a portion of which entered the hollow space 7. Meanwhile, Comparative Example 3, in which a through hole was provided in the in-mold foamed molded product, brought a feeling of discomfort to such an extent that the sitting person felt uncomfortable. This is because cushioning property for the hip was significantly reduced when the hip was positioned immediately on the cushion material 5 most of which entered the through hole.

### Industrial Applicability

A vehicle seat core material in accordance with an embodiment of the present invention is a vehicle seat core material that (i) is constituted by an in-mold foamed molded product which is made of thermoplastic resin expanded particles and is embedded with an insert material and (ii) allows for easy and quick coupling of a surface cover of a vehicle seat to the vehicle seat core material. Thus, a vehicle seat core material in accordance with an embodiment of the present invention is suitably usable as a vehicle seat core material that requires weight reduction.

### Reference Signs List

1: Vehicle seat
2: Vehicle seat core material
3: In-mold foamed molded product
3a: Seat surface of the in-mold foamed molded product
3b: Vehicle attachment surface of the in-mold foamed molded product
3c: Side surface of the in-mold foamed molded product
4: Insert material
5: Cushion material
6: Surface cover
6a: Surface cover (on a vehicle attachment surface side)
7: Hollow space
7b: Bottom of the hollow space
7c: Side wall of the hollow space
8: Insert material exposed portion
8a: Upper end portion of the insert material exposed portion
8b: Lower end portion of the insert material exposed portion
9: Protrusion (Embodiment 1)
9a: Upper surface of the protrusion (Embodiment 1)
9c: Side wall of the protrusion (Embodiment 1)
10: Coupler
11a: Cutout (hollow space)
11b: Cutout (vehicle attachment surface)
12: Convex mold
13: Concave mold
14: Molding space
15: Forming section
16: Groove
17: Passenger
17a: Head of the passenger
17b: Body part of the passenger
17c: Leg of the passenger
A: Space distance between the side wall of the protrusion and the side wall of the hollow space
H1: Distance from the bottom of the hollow space to the upper end portion of the insert material exposed portion
H2: Distance from the bottom of the hollow space to the upper surface around the hollow space
H3: Height of the protrusion
D: Gap between the lower end portion of the insert material exposed portion and the protrusion
E: Length of a perpendicular line from the upper surface of the protrusion to the lower end portion of the insert material exposed portion
T: Thickness of the protrusion

## Claims

1. A vehicle seat core material (2) constituted by an in-mold foamed molded product which is made of expanded particles of a thermoplastic resin and is embedded with an insert (4) material,
the vehicle seat core material comprising:
a hollow space (7) provided in a surface of the in-mold foamed molded product;
an insert material exposed portion (8) provided in the hollow space, the insert material exposed portion being an exposed portion of the insert material;
a protrusion (9) provided at a bottom (7b) of the hollow space so as to protrude through the bottom of the hollow space toward the insert material exposed portion; and
a gap (D) provided between the insert material exposed portion and the protrusion,
wherein the expanded particles of a thermoplastic resin are expanded particles of a polypropylene resin.

2. The vehicle seat core material according to claim 1, wherein the hollow space is provided in the surface of the in-mold foamed molded product in such a position as not to face parts of a body of a passenger.

3. The vehicle seat core material according to claim 1 or 2, wherein the hollow space is provided in a vehicle attachment surface of the in-mold foamed molded product.

4. The vehicle seat core material according to any one of claims 1 to 3, wherein a space distance between a side wall of the protrusion and a side wall of the hollow space is not less than 1 mm.

5. The vehicle seat core material according to any one of claims 1 to 4, wherein a perimeter of the hollow space in the surface of the in-mold foamed molded product is not less than 30 mm and not more than 300 mm.

6. The vehicle seat core material according to any one of claims 1 to 5, wherein a material of the insert material is a metal.

## Patentansprüche

1. Fahrzeugsitz-Kernmaterial (2), das aus einem in der Form geschäumten Formprodukt besteht, das aus expandierten Partikeln eines thermoplastischen Harzes hergestellt ist und in ein Einlagematerial (4) eingebettet ist,
wobei das Fahrzeugsitz-Kernmaterial aufweist:
einen Hohlraum (7), der in einer Oberfläche des in der Form geschäumten Formprodukts vorgesehen ist;
einen freiliegenden Einlagematerial-Abschnitt (8), der in dem Hohlraum vorgesehen ist, wobei der freiliegende Einlagematerial-Abschnitt ein freiliegender Abschnitt des Einlagematerials ist;
einen Vorsprung (9), der an einem Boden (7b) des Hohlraums vorgesehen ist, so dass er durch den Boden des Hohlraums zum freiliegenden Einlagematerial-Abschnitt vorsteht; und
einen Spalt (D), der zwischen dem freiliegenden Einlagematerial-Abschnitt und dem Vorsprung vorgesehen ist, wobei die expandierten Teilchen eines thermoplastischen Harzes expandierte Teilchen eines Polypropylenharzes sind.

2. Fahrzeugsitz-Kernmaterial nach Anspruch 1, wobei der Hohlraum in der Oberfläche des in der Form geschäumten Formprodukts an einer solchen Position vorgesehen ist, dass er nicht Teilen eines Körpers eines Passagiers zugewandt ist.

3. Fahrzeugsitz-Kernmaterial nach Anspruch 1 oder 2, wobei der Hohlraum in einer Fahrzeugbefestigungsfläche des in der Form geschäumten Formprodukts vorgesehen ist.

4. Fahrzeugsitz-Kernmaterial nach einem der Ansprüche 1 bis 3, wobei ein räumlicher Abstand zwischen einer Seitenwand des Vorsprungs und einer Seitenwand des Hohlraums nicht weniger als 1 mm beträgt.

5. Fahrzeugsitz-Kernmaterial nach einem der Ansprüche 1 bis 4, wobei ein Umfang des Hohlraums in der Oberfläche des in der Form geschäumten geformten Produkts nicht weniger als 30 mm und nicht mehr als 300 mm beträgt.

6. Fahrzeugsitz-Kernmaterial nach einem der Ansprüche 1 bis 5, wobei ein Material des Einlagematerials ein Metall ist.

## Revendications

1. Matériau d'âme de siège de véhicule (2) constitué par un produit en mousse moulé dans le moule qui est composé de particules expansées d'une résine thermoplastique et est intégré avec un matériau d'insert (4),
le matériau d'âme de siège de véhicule comprenant :
un espace creux (7) prévu dans une surface du produit en mousse moulé dans le moule ;
une partie de matériau d'insert exposée (8) prévue dans l'espace creux, la partie de matériau d'insert exposée étant une partie exposée du matériau d'insert ;
une saillie (9) prévue au fond (7b) de l'espace creux afin de faire saillie à travers le fond de l'espace creux vers la partie de matériau d'insert exposée ; et
un interstice (D) prévu entre la partie de matériau d'insert exposée et la saillie,
dans lequel les particules expansées d'une résine thermoplastique sont des particules expansées d'une résine de polypropylène.

2. Matériau d'âme de siège de véhicule selon la revendication 1, dans lequel l'espace creux est prévu dans la surface du produit en mousse moulé dans le moule dans une position telle qu'il ne fait pas face aux parties d'un corps d'un passager.

3. Matériau d'âme de siège de véhicule selon la revendication 1 ou 2, dans lequel l'espace creux est prévu dans une surface de fixation de véhicule du produit en mousse moulé dans le moule.

4. Matériau d'âme de siège de véhicule selon l'une quelconque des revendications 1 à 3, dans lequel une distance spatiale entre une paroi latérale de la saillie et une paroi latérale de l'espace creux n'est pas inférieure à 1 mm.

5. Matériau d'âme de siège de véhicule selon l'une quelconque des revendications 1 à 4, dans lequel un périmètre de l'espace creux dans la surface du produit en mousse moulé dans le moule n'est pas inférieur à 30 mm et n'est pas supérieur à 300 mm.

6. Matériau d'âme de siège de véhicule selon l'une quelconque des revendications 1 à 5, dans lequel un matériau du matériau d'insert est un métal.
